(19)

Europäisches
Patentamt
European
Patent Office
Office européen
des brevets

(11)  **EP 3 315 525 A1**

(12)  **EUROPEAN PATENT APPLICATION**

(43) Date of publication:
**02.05.2018  Bulletin 2018/18**

(21) Application number: **16462007.2**

(22) Date of filing: **28.10.2016**

(51) Int Cl.:
*C08G 18/48* (2006.01)    *C08G 18/64* (2006.01)
*C08G 18/76* (2006.01)    *C08J 9/14* (2006.01)
*C08G 18/18* (2006.01)    *C08K 5/521* (2006.01)
*E04B 1/74* (2006.01)    *E04C 2/02* (2006.01)
*C08G 101/00* (2006.01)    *C08K 3/32* (2006.01)
*C08K 3/38* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **EU PCM Közhasznu Nonprofit Kft.
6200 Kiskorös (HU)**

(72) Inventor: **Major, József
6200 Kiskorös (HU)**

(74) Representative: **Török, Ferenc
Danubia
Patent & Law Office LLC
Bajcsy-Zsilinszky út 16
1051 Budapest (HU)**

(54)  **POLYURETHANE-BASED BUILDING PRODUCT COMPRISING GROUND FEATHER**

(57)    The invention relates to a heat and sound insulation, particularly step sound insulation building product comprising hard polyurethane comprising animal originated ground feather, wherein the animal originated ground feather is involved in the cross-linking of the polyurethane, and thus the amount of the synthetic cross-linking agent is at most 50 wt% of the amount of the synthetic cross-linking agent needed for the required hardness.

EP 3 315 525 A1

**Description**

Field of Invention

The invention relates to a building product having excellent mechanical properties (particularly good fire resistance and sound insulation, particularly step sound insulation properties) the main component of the material of which is animal originated ground feather and polyurethane copolymer. At the same time the invention provides an opportunity for utilization of the animal originated feather considered as a hazardous waste.

Background Art

The combination of the animal originated feather (hereinafter: feather) and the plastics are known in the prior art. US 2005/0205226A1 describes a combination of feather and resins, wherein the resin is preferably polyurethane. Particularly heat insulating boards are produced from the manufactured foamed or unfoamed material. During the production the polyurethane precursors conventionally used in the manufacturing of the hard polyurethane plastic materials (see the polyol-polyisocyanate precursors mentioned in the middle of the paragraph [0012]) are mixed with the feather and other conventional excipients. In the preferable embodiment the board comprises fiberglass reinforcement on both sides, and based on the description it cannot be used for interior decoration purposes.

CN 103 882 627A describes materials having insulation effect particularly for use in the apparel industry, which materials comprise 40-60 wt% of feather, 5-10 wt% of polyurethane film, 10-20 wt% of organic material, and 10-20 wt% of polyester. The technical field according to the description differs from the solution based on the present invention, since the polyurethane as a separated phase covers the surface of the feathers only in a filmwise manner.

CN 202 540 87U also describes heat insulation materials comprising natural feather, wherein the feathers are covered by a thermoplastic, e.g. polyurethane. The essential components of the composition are a fibrous material and polyester type plastics. Also in this case the technology relates to layered and isolated chemical structures.

In TW 473 589B feather degreased and washed with alcohol is used together with polypropylene and/or polyethylene. The material is applied for the manufacturing of a building product, however, the chemical combinability with polyurethanes is not mentioned.

In the solution according to FR 2 844 816 A1 a thermoplastic material is mixed with natural fibres, wherein the feather as a fibrous material is mentioned. The applying of the polyurethane is not disclosed by the description. The material is used for the manufacturing of building products.

We note here that in the case of such solutions, where the surface of the feather is treated with polyurethane, the feather cannot exhibit cross-linking effect (see details below), which is the substantial part of the present invention.

WO2000/017460A1 describes an insulating material used in roof covering, wherein the used animal originated fibrous material can be feather. The application of polyurethane is not mentioned in the description.

It is an object of the invention to provide such a material useful in the building industry, which has excellent mechanical properties, particularly good heat and sound insulation, particularly step sound insulation properties, and it possesses suitable strength and fire resistance, and further it can be produced by an environmentally sound technology. The building product is characterized that it comprises feather in a great amount for creating cross-linker binds between the polymer chains (cross-linking). Thus the present invention allows of utilizing the feather considered as a hazardous waste, in other words, by its help the environmental impact due to the disposal (e.g. incineration) of the feather used for the goal of the present invention can be avoided. Additionally, it is not needed for the usual synthetic cross-linkable compounds, as they are substituted by the used feather.

During the poultry meat production, a remarkable amount of poultry feather is forming where a part of it is utilized in a well known manner in the everyday life for e.g. feather pillows, feather coats. The feather, which cannot be used for this goal, is considered as a hazardous waste in Europe and throughout the world, primarily not due to the toxicity of the material, but due to its stability, that is its slow degradation. Only in Hungary the average amount of the slaughtered poultry was 360-480 thousand tons per year between 2010 and 2015 (*https://www.ksh.hu/docs/hun/eurostat_tablak/tabl/tag00043.html*), accordingly, about 23-30 thousand tons of waste feather is formed yearly the disposal of which should be accomplished. The European Union law (1576/2007/EK Regulation, 1774/2002/EK Regulation, 71/2003 FVM Regulation) strictly define the disposal and deposition of animal by-products not intended for human consumption, thus, among others, the utilization of the milled feather produced form the feather originated from slaughterhouse as a feed is significantly restricted by the valid veterinary regulation. Therefore, such innovative developments and methods are necessary, which enables the utilization the formed waste feather.

Besides some pigment and 1-2% of fat content the feather mainly consists of protein, wherein the 85% of the protein content is keratin. The keratin is a protein containing a high amount of cysteine. The cysteine is significant regarding to the stability, as the disulfide bridges between them result in the extreme stability of the keratin, and thus of the feather.

Brief Description of the Invention

In particular, the invention relates to:

1. A heat and sound insulation building product comprising hard polyurethane, which comprises animal originated ground feather, wherein the animal originated ground feather is involved in the cross-linking of the polyurethane, and thus the amount of the synthetic cross-linking agent in the product is at most 50% of the amount of the synthetic cross-linking agent needed for the required hardness.

2. The building product according to point 1, wherein the amount of the synthetic cross-linking agent is at most 40 wt%, more preferably at most 30 wt%, even more preferably at most 20 wt%, even more preferably at most 10 wt%, and still more preferably at most 5 wt% of the total amount of the all isocyanate compounds.

3. The building product according to point 1 or 2, further comprising one or more excipients selected from the group of flame retardant materials, foaming agents, and polymerization catalysts.

4. The building product according to any of points 1 to 3, wherein the amount of the ground feather is 5-70 wt% based on the total weight of the product.

5. The building product according to any of points 1 to 4, wherein the precursor having hydroxyl groups of the polyurethane is polypropylene glycol.

6. The building product according to any of points 1 to 5, wherein the isocyanate type precursor of the polyurethane is diphenylmethane diisocyanate.

7. A method for producing a heat and sound insulation building product, characterized in that it comprises the following steps:

   a) polyurethane precursor having hydroxyl groups, diisocyanate type polyurethane precursor, one or more excipients and ground feather are mixed;
   b) the obtained mixture is poured into a mould;
   c) after the polymerization the obtained product is removed from the mould.

8. The method according to point 7, wherein the amount of the ground feather is 5-70 wt% based on the total weight of the product.

9. The method according to point 7 or 8, characterized in that in said step a) firstly the foaming excipient is mixed with the polyurethane precursor having hydroxyl groups, and then the flame retardant excipient, and subsequently the diisocyanate type polyurethane precursor, and finally the feather is mixed thereto.

10. The method according to any of points 7 to 9, wherein polypropylene glycol is used as the polyurethane precursor having hydroxyl groups.

11. The method according to any of points 7 to 10, wherein diphenylmethane diisocyanate is used as the diisocyanate type polyurethane precursor.

12. Use of animal originated ground feather as a cross-linking agent in the producing of polyurethane.

Detailed Description of the Invention

The crucial component of the building product according to the present invention is the animal originated ground feather typically feather originated from poultry, such as chicken, duck, gosling, goose etc. (hereinafter shortly: feather). An important feature of the present invention is that the applied feather is ground feather, which is ground after cleaning in usual grinding equipments, such as a circular knife grinding equipment. The length of the feather pieces obtained after grinding is typically 1-15 mm, preferably 2-10 mm. Based on our measurements the building product comprising such ground feather has an excellent heat and sound insulation, typically excellent step sound insulation property (which is better than that of building product produced from whole feather), and further excellent strength and fire resistance.

The applied feather preferably is not useful for producing of a higher value-added product (typically feather pillow, feather coat etc.) or for other goal. Before the use the feather is cleaned in the usual way (typically with water optionally comprising alcohol, preferably ethyl alcohol) during which the impurities and the fat is removed from its surface.

The feather is the 5-70 wt%, preferably 10-50 wt%, even more preferably 15-45 wt%, and still more preferably 20-40 wt% of the product according to the present invention.

The other crucial component of the building product according to the present invention is polyurethane formed by the reaction of compounds comprising isocyanate groups and OH groups, particularly in the presence of a catalyst. The polyurethanes typically are polymers formed by the polyaddition reaction of di- and/or triisocyanates and diols and/or triols. Their common feature is that their molecules comprise urethane groups (R1-NH-CO-O-R2). Except for the simplest cases their structure cannot be defined exactly due to the varied polymerization reactions of the used monomers and due to that generally several kinds of monomers are used in the preparation even within each monomer type.

Polyurethane-based materials (which are often foamed solid materials) are used in many areas, for example, as a sealant, an insulant. A lot of kinds of the polyurethanes are known from the literature, as the variety of the compounds comprising isocyanate groups and OH groups usable as a precursor is extremely wide, and additionally a lot of variants of them are used in the practice.

Basically two types of polyurethanes can be distinguished: the soft (or flexible) and the hard polyurethanes (in both cases the foamed type is typical in the practice). The hardness/strength of the polyurethane depends on the number of the cross-linking bonds (that is the bonds linking the linear polymer chains to stabilize the structure) formed during the polymerization starting from the precursors. Such precursor monomers are required for the cross-linking, which contain at least three functional groups (which can be isocyanate or hydroxyl groups). Obviously, only linear chains can be formed from diisocyanates and diols. The production of the soft polyurethanes is disclosed, for example, in patent HU 227871. An example of the prior art documents disclosing the production of the hard polyurethanes is patent EP2111423.

A typical isocyanate type monomer (precursor) of the soft and hard polyurethane is usually diphenyl methane diisocyanate (diphenylmethane-4,4'-diisocyanate, MDI, also known as methylene biphenyl diisocyanate). Examples of other suitable diisocyanates are 2,4- or 2,6-toluene diisocyanate (TDI) (also known as toluene-2,4-diisocyanate and toluene-2,6-diisocyanate), m-phenylene diisocyanate, hexamethylene-1,6-diisocyanate, tetramethylene-1,4-diisocyanate, cyclohexane-1,4-diisocyanate, hexahydrotoluene-2,4-diisocyanate, hexahydrotoluene-2,6-diisocyanate, naphthalene-1,5-diisocyanate, 4,4'-diphenylene diisocyanate, 3,3'-dimethoxy-4,4'-biphenyl diisocyanate, 3,3'-dimethyl-4,4'-biphenyl diisocyanate and 3,3'-dimethyl diphenyl methane-4,4'-diisocyanate.

Typically, a multi-ring aromatic polyisocyanate compound is used as a cross-linking isocyanate monomer (precursor), preferably polyphenylene-polymethylene-polyisocyanate [polymethylene-poly(phenylisocyanate)] ensuring the hardness of polyurethane, e.g. polymerized MDI type precursor compound. Preferably, the polyphenylene-polymethylene-polyisocyanate type cross-linking precursor is an oligomer compound, which more preferably comprises 3, 4 and/or 5 aromatic phenylene rings, wherein the phenylene rings have isocyanate groups.

The other essential component of the soft and hard polyurethanes is the precursor compound having hydroxyl groups, the examples of which are diols compounds, such as ethylene glycol, 1,2-propylene glycol, 1,3-propylene glycol, 1,4-butylene glycol, 2,3-butylene glycol, 1,6-hexanediol, 1,8-octanediol, neopentyl glycol, 1,4-bis(hydroxy-methyl)-cyclohexane, 2-methyl-1,3-propanediol, diethylene glycol, triethylene glycol, tetraethylene glycol and polyethylene glycols having even more molecular weight, dipropylene glycol and polypropylene glycols, as well as dibutylene glycol and polybutylene glycols and additional oxyalkylene glycols, wherein polypropylene glycol is preferred.

The cross-linking of polyurethane can be achieved with precursors containing more than two OH groups, however, this kind of cross-linking has less practical importance.

We have surprisingly found that by using the feather the above-mentioned cross-linking agent, which is typically a polyisocyante type cross-linking agent, can be replaced, that is, the soft polyurethane can be converted into hard polyurethane by using of feather without synthetic cross-linking agent. However, this fact does not exclude such a kind of the product according to the invention, which comprises, besides the feather, a conventional synthetic cross-linking agent (even diol type cross-linking agent) in a less amount. A preferred embodiment of the product according to the invention is free from synthetic cross-linking agents. A further preferred embodiment, wherein at least 50%, more preferably 75%, even more preferably 90%, still more preferably 95% of the cross-linking bonds are provided by the feather added to the product, that is, the amount of the synthetic cross-linking agent used in the product is at most 50 wt%, preferably at most 25 wt%, even more preferably at most 10 wt%, still more preferably at most 5 wt% of the amount of the synthetic cross-linking agent required for the desired extent of the cross-linking.

The amount of the synthetic cross-linking agent (typically synthetic cross-linking isocyanate compound) can be based on the total amount of all isocyanate compounds (components) used for the polymerization. In this case a further preferred embodiment is that wherein the amount of the synthetic cross-linking agent is at most 40 wt%, more preferably at most 30 wt%, even more preferably at most 20 wt%, even more preferably at most 10 wt%, and still more preferably at most 5 wt% of the total amount of all isocyanate compounds. We also note here that the most preferred embodiment is the product free from synthetic cross-linking agent.

The obtained product possesses excellent heat insulation property (its heat insulating ability is within the range of the best quality building insulants) and has very good mechanical properties (compressive and tensile strength), and further it is a much better sound insulant, preferably step sound insulant, than the corresponding soft polyurethane without feather [e.g. Elastopor H-1221 (BASF)]. Additionally, the utilization of the feather surprisingly improves the fire resistance of the obtained polyurethane, as the obtained composite is more fire resistant than the corresponding soft polyurethane [e.g. Elastopor H-1221 (BASF)] or the feather alone.

A building product having arbitrary size can be formed from the material according to the present invention depending on the used mould. A typical product is the sheet-like product, which can be an interior step resistant floor/tread surface insulation panel, wherein the width and the length is variable in a relatively narrow range (typically in the range of 30-90 cm, preferably in the range of 40-80 cm), while the thickness is typically 25-75 mm, preferably 45-55 mm).

Excipients

The product according to the invention can comprise, besides the foregoing main components, one or more excipients selected from the following groups.

Flame retardant (fire retardant) materials, such as monoammonium phosphate, ammonium sulphate, borax. Borax, at the same time, is an antimicrobial, antifungal and anti-rodent material; however, other excipient having such an effect also can be used.

Examples of the foaming agents, which can be used for the modification of the product density, are CFC (chlorofluorocarbon) compounds, HCFS (hydrogen chlorofluorocarbon) compounds, pentane and methyl formate.

The heat generation during the polyurethane production enables to use foaming additives that evaporate or gas due to the heat generation (e.g. pentane). As, however, the goal for the product is the step resistance, preferably it comprises no or only a small amount of the foaming agent.

Typically, the polyurethanes also comprise a catalyst that provides the suitable rate of the reaction. Examples of these are tin(II) salts or dialkyltin(II) salts of carboxylic acids, amine type compounds, such as benzyldimethylamine, dimethylethanolamine (DMEA), dimethylaminopropylamine (DMAPA) etc., wherein benzyldimethylamine is preferred.

Other excipient conventional in the building industry, such as a colorant, can be used.

We note that such a product according to the invention can be considered suitable, which only consists of

a) polyurethane precursors, ground feather, catalyst, flame retardant, foaming agent and colorant;
b) polyurethane precursors, ground feather, catalyst, flame retardant and foaming agent;
c) polyurethane precursors, ground feather, catalyst and flame retardant;
d) polyurethane precursors, ground feather and catalyst;
e) polyurethane precursors, ground feather and flame retardant;
f) polyurethane precursors and ground feather.

Production of the polyurethane-based building material according to the invention

In the closest solutions known from the prior art documents - among of which we discuss that disclosed in US 2005/0205226A1 below - the precursors mixed with feather are the precursors usually used in the polyurethane production, including the usual polyisocyanate type cross-linking precursors to provide the hardness (see the polyol-polyisocyanate precursors mentioned in the middle of the paragraph [0012]). In the known method polyurethane precursors and feather are mixed in one step, and then the polymerization reaction is started by addition of a catalyst (we note that in the practice the catalyst is typically added together with one of the precursors).

In contrast to the known method, in the method according to the invention precursors used for the soft polyurethane production are used for the hard polyurethane production, however, not synthetic isocyanate type cross-linking agent (polyisocyanate), but ground feather is used for hardening the polyurethane. Surprisingly, by using this method the synthetic cross-linking agent can be replaced in the hard polyurethane production. We explain this phenomenon by that the proteins forming the main mass of the feather comprise amino acids having numerous such amino-, hydroxyl- and carboxylic groups, which are capable of reacting with isocyanate group, and the spatial cross-linking of the linear polymer chains thereby being achieved.

It should be stated that in US 2005/0205226A1 there is no hint that the amount of the usual synthetic cross-linking agent can be reduced by the utilization of feather, therefore, it is definitely not referred to that it can be even fully replaced with feather.

As we noted, the feather improves the fire resistance of the product even alone, however, by addition of usual flame retardant materials (e.g. monoammonium phosphate or borax, which is, at the same time, an antimicrobial, antifungal and anti-rodent material) the fire resistance can be enhanced and can be set in a range consistent with the application standard. The coefficients of the thermal conduction of the product are within the range of the best quality insulants, besides the appropriate flexibility and abrasion resistance.

The density and other properties of the product can be also modified with the foam agents described above (if it is used), wherein 1,1,1,3,3-pentafluorobutane is preferred. It should be noted that the bulk density of the product is remarkably higher than the panels produced with whole feather, which preferably increases the load capacity. Typically, polymerization catalyst, preferably benzyldimethylamine can be used in the production to increase the rate of the reaction, which is an exothermal procedure accompanied with heat generation. The catalyst is expediently added (e.g. pre-mixed) together with one of the precursors. The heat generation enables the utilization of such foaming additives, which evaporate or gas due to the heat generation (e.g. pentane). It should be noted that the foaming is reasonable to use only in that case, if the mechanical strength of the floor/tread surface can be provided by other material.

In our certain tests two precursors of the soft polyurethane [in our exemplified tests the A) and B) components of Elastopor H-1221 (BASF)] were mixed, and subsequently the ground feather was added.

EXAMPLES

**I. Production examples**

Example 1

A panel having size of 800*400*50 mm was produced where the material requirements were as follows:

a) The used polymerization A) (PUR A) component is 0.65 kg of A) component of the commercially available Elastopor H-1221/43 (BASF, ID No. 30243976/SDS_GEN_HU/HU) product, the composition of which is as follows based on the product catalogue:

Polyol: polypropylene glycol.

Content (W/W): < 25 %.
CAS No.: 25322-69-4.

Catalyst: benzyldimethylamine.

Content (W/W): >= 1 % - < 3 %.
CAS No.: 103-83-3.
EUNo.: 203-149-1.
INDEX No.: 612-074-00-7.

Flame retardant: tris(2-chloro-1-methylethyl)-phosphate.

Content (W/W): >= 3 % - < 20 %.
CAS No.: 13674-84-5.
EUNo.: 237-158-7, 911-815-4.
REACH Registry No.:01-2119486772-26.

Propellant (foaming agent): 1,1,1,3,3-pentafluorobutane.

Content (W/W): >= 4 % - <= 9 %.
CAS No.: 406-58-6.

b) The used polymerization B) component (PUR B) is 0.75 kg of B) component of the commercially available Elastopor H-1221/43 (BASF) product, which is diphenylmethane diisocyanate (MDI) [IsoPMDI 92140].
c) Ground poultry feather: 1.1 kg (blend of poultry feathers originated from slaughterhouse, the main mass of which is formed by chicken feather, the grinding was carried out with knife grinding equipment (Wanner 20.20), the size of the ground feather pieces is about 2-10 mm).
d) Borax [(di)sodium tetraborate]: 0.31 kg.
e) Monoammonium phosphate (MAP): 0.31 kg.

The mixing of the base materials is preformed in the following order and manner:

Pentane is added to and mixed with the component PUR A at an ambient temperature under atmospheric pressure in an 80 1 mixer, and borax and monoammonium phosphate (MAP) is added to the obtained mixture, and the mixture is stirred to homogeneity. The component B is mixed in the obtained mixture, and it is homogenized, and subsequently the total amount of the ground feather is added, and then the obtained mixture is stirred evenly.

The obtained mixture is poured into a mould. After the polymerization has been completed the product is removed from the mould and cut to size.

## II. The physical/mechanical properties of the obtained product

### A) HEAT INSULATION PROPERTIES

Coefficients of the thermal resistance and thermal transmittance were calculated in accordance with the standard EN ISO 6946:2008. The products were tested in accordance with the standard MSZ EN 12667:2001.

The testing of the test specimens was carried out after a conditioning at laboratory climate. The date of the test: from April 20 to April 25, 2016.
Condition of air in the laboratory: 20-23 °C, cp = 45-52.
Test equipment: HOLOMETRIX Rapid-k, RK-80a.
Single specimen, horizontal, asymmetric arrangement, vertical downward heat transfer. Surface of the equipment: 0.3 m x 0.3 m.
Measuring surface: 0.1 m x 0.1 m
Measurement uncertainty: < 5 %.
Calibration date: April 19, 2016.
Test identifier: 16041950.CAL
Validity: May 18, 2016.
Identifier of the reference specimen: CAL 2-09
Material of the reference specimen: EPS (expanded polystyrene)
Thermal resistance of the reference specimen: R = 1.27 $m^2$K / W
Weight change of the specimen during the measurement preparation and the measurement: 0.

**Table 1**

| Identifier of specimen | Type | Density [kg/m³] | Thermal resistance [m²K/W] | Coefficient of thermal conductivity [W/m K] |
|---|---|---|---|---|
| LA-010/2016 | DT P3-21 | 185.49 | 1.088 | 0.047404 |
| LA-011/2016 | DT P3-21 | 192.50 | 1.056 | 0.047552 |

$$\lambda_{DTP3-21} = 0.046 \text{ W/mK}$$

$$R_{ATP3-21} = 1.30 \text{ m}^2\text{K / W}$$

The specimens in the table are the products produced according to Example 1.
The results demonstrate that the product according to the invention has excellent heat insulation properties.

### B) SOUND INSULATION PROPERTIES

The step sound insulation tests were carried out in accordance with the standard MSZ EN ISO 10140-3:2011. The determination of the weighted sound insulation properties was carried out in accordance with the standard MSZ EN ISO 717-2:2013.
The test equipments were as follows:

- Brüel&Kjaer PULSE 3160A042 LAN-XI measuring system
- Brüel&Kjaer 4190 microphone
- Brüel&Kjaer 2669 microphone preamplifier
- RION NC73 acoustic calibrator
- DS600 performance amplifier
- TOA F-505G sound source
- Brüel&Kjaer 3204 standard step sound generator

The step sound insulation values of the product according to Example 1 are as follows:

| 1 | ¬ 4 cm thick gypsum concrete board (floated board) ¬ 5 cm thick feather panel - with ground feather (floating layer) ¬ 15 cm thick reinforced concrete floor board | $L_{n,w}(C_I)$ = 41 (-1) dB |
|---|---|---|
| 2 | ¬ 4 cm thick gypsum concrete board (floated board) ¬ 2 cm thick Rockwool Steprock ND cotton board (floating layer) ¬ 5 cm thick feather panel - with ground feather (floating layer) ¬ 15 cm thick reinforced concrete floor board | $L_{n,w}(C_I)$ = 39 (0) dB |
| 3 | ¬ 4 cm thick gypsum concrete board (floated board) ¬ 2 cm thick Rockwool Steprock ND cotton board ¬ 15 cm thick reinforced concrete floor board | $L_{n,w}(C_I)$ = 43 (-4) dB |
| 4 | ¬ 4 cm thick gypsum concrete board (floated board) ¬ 5 cm thick PO PUR foam board ¬ 15 cm thick reinforced concrete floor board | $L_{n,w}(C_I)$ = 48 (-6) dB |

Based on the tests it can be stated that the feather panel according to the invention in the floated floor board provides better step sound insulation that the structure produced with similar construction, but with the conventional PUR foam.

## C) OTHER MECHANICAL PROPERTIES

The properties according to Table 2 were also tested by the methods specified therein (the designations are the reference designations of the corresponding Hungarian standards) and by the devices according to Table 3.

### Table 2: Test methods

| Test | Test method | T (°C) | RH (%) |
|---|---|---|---|
| Thickness | MSZ EN 823:2013 | 24 | 50 |
| Bulk density | MSZ EN 1602:2013 | 24 | 50 |
| Compressive stress at 10% deformation | MSZ EN 826:2013 | 24 | 50 |
| Tensile strength perpendicular to surface | MSZ EN 1607:2013 | 25 | 48 |
| Bending strength | MSZ EN 12089:2013 | 24 | 50 |

### Table 3: Data of the test devices

| Test device | Measurement range of the device | Identity No. of the device | Verified state of the device |
|---|---|---|---|
| Digital slide caliper | 0-200 mm/0.01 mm | 201.2. | calibrated |
| Gauge blocks | 15, 50 mm high | 241. | calibrated |
| Aluminium loading plate | 250 Pa | 242. | calibrated |
| Precisa electronic balance | 5 - 4000 g/0.01 g. | 207.2. | calibrated |
| Zwick material testing device - 10 kN dynamometer cell (renewed) - 10 kN dynamometer cell (new) | 0 - 5 kN / 0.1 N 0 - 10 kN / 1 N | 222. 222.3. 222.4. | checked calibrated calibrated |

RESULTS

*a) Thickness and bulk density*

**Table 4**

| Count of tested samples: 5 | Thickness [d] (mm) | | Bulk density $[p_a]$ (kg/m$^3$) | |
|---|---|---|---|---|
| | Panel with whole feather | Panel with ground feather | Panel with whole feather | Panel with ground feather |
| Average | 51.5 | 50.4 | 139.5 | 177.0 |

The size of the tested samples: 200x200x50 mm. Test date: September 7 and September 13, 2016. The tested samples are the products produced according to Example 1.

*b) Compressive stress at 10% deformation*

**Table 5**

| Count of tested samples: 4 | Compressive stress at 10% deformation $[\sigma]$ (kPa) | |
|---|---|---|
| | Panel with whole feather | Panel with ground feather |
| Average | 98.7 | 128.1 |

The size of the tested samples: 200x200x50 m; test rate: 5 mm/min. Test date: September 7 and September 13, 2016. The tested samples are the products produced according to Example 1.

*c) Bending strength*

**Table 6**

| Count of the tested samples:6 | Bending strength $[\sigma_h]$ (kPa) | |
|---|---|---|
| | Panel with whole feather | Panel with ground feather |
| Average | 500.2 | 163.7 |

The size of the tested samples: 300x150x50 mm; test rate: 10 mm/min. Test date: September 7 and September 13, 2016. The tested samples are the products produced according to Example 1.

The results demonstrate that the products according to the invention have such physical and mechanical properties, which excellently meet the requirements of building industry and provide a suitable applicability and constructability, for use particularly in exterior frontage insulation systems as heat and sound insulation layer.

**D) FLAME RETARDANCY**

Based on the performed tests the wall comprising the sample made from the material according to Example 1 meets the requirements of the fire safety class B - s2, d0 according to the standard MSZ EN 13501-1:2007+A1:2010.

Explanation of the fire safety indicators

Letter - behaviour, it provides information on the rate of the development and the energy derived from the combustion of the product.

sX - smoke production, it provides information on the amount and the speed of the smoke forming during the combustion.

dY - flaming droplets, it indicates whether such melt is formed or such burning part of material left from the sample, which facilitates the spreading of the fire.

Meaning of the indicators found in the case of the tested samples

a) Fire safety classes: A1>A2>**B**>C>D>E>F. The safety class B is the highest class achievable among materials comprising organic substances at such a high amount.

b) s1>**s2**>s3: in the case of s2 there is smoke development, typically it should not be located on the escape route according to OTSZ (National Fire Safety Regulation).

c) **d0**>d1>d2: in the case of d0 there are no flaming droplets.

Accordingly, the product according to Example 1 is recommended for use in building industry based on its flame retardancy.

**Claims**

1. A heat and sound insulation building product comprising hard polyurethane, which comprises animal originated ground feather, wherein the animal originated ground feather is involved in the cross-linking of the polyurethane, and thus the amount of the synthetic cross-linking agent in the product is at most 50% of the amount of the synthetic cross-linking agent needed for the required hardness.

2. The building product according to claim 1, wherein the amount of the synthetic cross-linking agent is at most 40 wt%, more preferably at most 30 wt%, even more preferably at most 20 wt%, even more preferably at most 10 wt%, and still more preferably at most 5 wt% of the total amount of the all isocyanate compounds.

3. The building product according to claim 1 or 2, further comprising one or more excipients selected from the group of flame retardant materials, foaming agents, and polymerization catalysts.

4. The building product according to any of claims 1 to 3, wherein the amount of the ground feather is 5-70 wt% based on the total weight of the product.

5. The building product according to any of claims 1 to 4, wherein the precursor having hydroxyl groups of the polyurethane is polypropylene glycol.

6. The building product according to any of claims 1 to 5, wherein the isocyanate type precursor of the polyurethane is diphenylmethane diisocyanate.

7. A method for producing a heat and sound insulation building product, **characterized in that** it comprises the following steps:

a) polyurethane precursor having hydroxyl groups, diisocyanate type polyurethane precursor, one or more excipients and ground feather are mixed;
b) the obtained mixture is poured into a mould;
c) after the polymerization the obtained product is removed from the mould.

8. The method according to claim 7, wherein the amount of the ground feather is 5-70 wt% based on the total weight of the product.

9. The method according to claim 7 or 8, **characterized in that** in said step a) firstly the foaming excipient is mixed with the polyurethane precursor having hydroxyl groups, and then the flame retardant excipient, and subsequently the diisocyanate type polyurethane precursor, and finally the feather is mixed thereto.

10. The method according to any of claims 7 to 9, wherein polypropylene glycol is used as the polyurethane precursor having hydroxyl groups.

**11.** The method according to any of claims 7 to 10, wherein diphenylmethane diisocyanate is used as the diisocyanate type polyurethane precursor.

**12.** Use of animal originated ground feather as a cross-linking agent in the producing of polyurethane.

Europäisches Patentamt
European Patent Office
Office européen des brevets

**EUROPEAN SEARCH REPORT**

Application Number

EP 16 46 2007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WRZESNIEWSKA-TOSIK K. ET AL.: "Feathers as a Flame-Retardant in Elastic Polyurethane Foam", FIBRES & TEXTILES IN EASTERN EUROPE, vol. 22, no. 1, 1 January 2014 (2014-01-01), pages 119-128, XP002766228, IBWCh | 7,8,12 | INV. C08G18/48 C08G18/64 C08G18/76 C08J9/14 C08G18/18 C08K5/521 E04B1/74 |
| A | * the whole document * | 1-6,9-11 | E04C2/02 |
| X | DATABASE WPI Week 199510 Thomson Scientific, London, GB; AN 1995-070477 XP002766226, & JP H06 345976 A (ISHIHARA YAKUHIN KK) 20 December 1994 (1994-12-20) | 12 | ADD. C08G101/00 C08K3/32 C08K3/38 |
| A | * abstract * | 1-11 | |
| A,D | US 2005/205226 A1 (HARDER REGINALD B [CA]) 22 September 2005 (2005-09-22) * paragraphs [0001] - [0003], [0009] - [0015] * | 1-12 | |

TECHNICAL FIELDS SEARCHED (IPC)

C08G
C08J
C08K
E04B
E04C

The present search report has been drawn up for all claims

| Place of search | Date of completion of the search | Examiner |
|---|---|---|
| Munich | 5 April 2017 | Neugebauer, Ute |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 46 2007

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2017

| Patent document cited in search report | Publication date | Patent family member(s) | Publication date |
|---|---|---|---|
| JP H06345976 A | 20-12-1994 | NONE | |
| US 2005205226 A1 | 22-09-2005 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050205226 A1
- CN 103882627 A
- CN 20254087 U
- TW 473589 B

- FR 2844816 A1
- WO 2000017460 A1
- HU 227871
- EP 2111423 A